# EUROPEAN PATENT SPECIFICATION

(11) **EP 2 400 837 B1**
(45) Date of publication and mention of the grant of the patent: **26.10.2016**
(21) Application number: 10711071.0
(22) Date of filing: 01.03.2010
(51) Int. Cl.: A01N 47/44, A01N 33/12, A01N 43/80

(54) **DISINFECTANT COMPOSITION COMPRISING A BIGUANIDE COMPOUND**
DESINFEKTIONSMITTELZUSAMMENSETZUNG, DIE EINE BIGUANIDVERBINDUNG UMFASST
COMPOSITION DE DÉSINFECTANT COMPRENANT UN COMPOSÉ DE BIGUANIDE

(30) Priority: 27.02.2009 GB 0903375
(43) Date of publication of application: 04.01.2012
(73) Proprietor: BIO TECHNICS LIMITED, Gourdon Aberdeenshire DD10 ONH (GB)
(72) Inventor: EVANS, Thomas David, Inverbervie Aberdeenshire DD10 0SP (GB); HILL, David Gordon, Angus DD10 9EG (GB)
(74) Representative: Hindle, Alistair Andrew
(86) International application number: PCT/GB2010/050358
(87) International publication number: WO 2010/097639

(56) References cited:
- EP-A1- 1 277 403
- EP-A2- 0 210 034
- WO-A1-2007/101445
- WO-A1-2009/037445
- WO-A2-2006/067516
- WO-A2-2007/027871
- WO-A2-2009/117299
- US-A1- 2004 204 496

## Description

### Field of the invention

The invention relates to the use of a disinfectant composition which demonstrates sporicidal efficacy against some bacteria such as *Clostridium Difficile* in a method for disinfecting surfaces and/or for preventing infection.

### Background to the invention

Nosocomial infections have always been a major issue in hospitals, nursing homes or similar institutions where residents are at an elevated risk of infection due to their failing health, their compromised immune system etc.

Antibiotics are used to kill or inhibit the growth of infectious organisms such as pathogenic bacteria. Unfortunately, the increased use of antibiotics has been accompanied by an alarming spread of antibiotic-resistant or opportunistic bacteria. *Clostridium difficile,* for example, are now a common cause of infections in hospitals. Clostridia are motile bacteria that are ubiquitous in nature and are especially prevalent in soil.

When stressed, certain bacteria and fungi produce spores, which tolerate extreme conditions that the active bacteria cannot tolerate. For example, *C. difficile* is a strain which is present in the human intestine in 2-5% of the population. In small numbers, *C. difficile* does not result in significant disease. However antibiotics, especially those with a broad spectrum of activity, cause disruption of normal intestinal flora, leading to an overgrowth of *C*. *difficile,* which flourishes under these conditions. This can lead to various inflammatory diseases.

Antibiotic treatment of *C. difficile* infections can be difficult, due both to antibiotic resistance as well as physiological factors of the bacteria itself (spore formation, protective effects of the pseudomembrane). As the organism forms spores which are heat resistant and not destroyed by conventional biocidal agents, *C. difficile* spores can survive normal hospital cleaning procedures and can remain in the hospital or nursing home environment for long periods of time, able to germinate when conditions are favourable, resulting in *C. difficile* infection even after deep cleaning. Furthermore, *C. difficile* can be cultured from almost any surface in the hospital. Additionally, the spores themselves may be picked up from surfaces and ingested or transferred to other surfaces. Once spores are ingested, they pass through the stomach unscathed because of their acid-resistance. They change to their active form in the colon and multiply. Pseudomembranous colitis caused by *C. difficile* is treated with specific antibiotics, for example, vancomycin, metronidazole, bacitracin or fusidic acid.

Several disinfectants commonly used in hospitals may be ineffective against organisms which form spores, such as *C. difficile,* and may in some cases actually promote spore formation. There is therefore a strong need for the development of novel disinfectant compositions which exhibit efficacy against spore forming organisms such as *C. difficile.*

Sporicidal agents are known. However, conventional sporicidal agents such as hydrogen peroxide, formaldehyde and peracetic acid are highly toxic and thus not suitable for frequent use. Furthermore, the sporicidal activity of such agents require specific conditions and are intolerant of "dirty" conditions, i.e. exposure to organic matter, and thus remain effective for a short time only. Accordingly, these agents are unsuitable for use to pre-treat materials (such as fabrics or plastics) in order to provide them with inherent long term resistance to sporicidal contamination.

Biguanide polymers such as polyaminopropyl biguanide (PAPB) or polyhexamethylene biguanide (PHMB) are a preservative and a disinfectant used for disinfection on skin and in cleaning solutions for contact lenses. PHMB is a polymer which comprises biguanide functional groups which are connected by hexyl hydrocarbon chains, with varying chain lengths. It can be represented by the general structure:

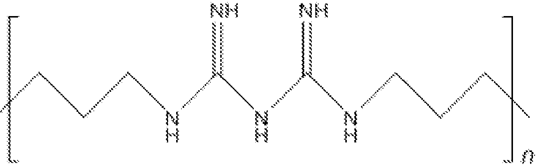

It is usually used as a heterodisperse mixture of PHMB polymer hydrochlorides of different lengths with an average molecular weight of approximately 3,000 Da, which can be represented by the general formula:

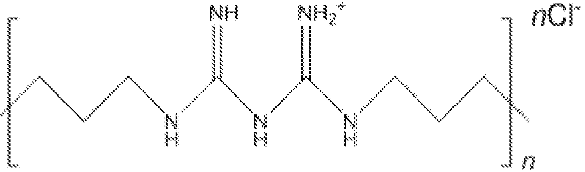

PHMB polymer hydrochloride is sold under various trade names such as Vantocil IB. (Vantocil and Vantocil IB are Trade Marks of Arch chemicals, Inc.) PAPB is specifically bactericidal at very low concentrations (typically of the order of 10 mg/l). Furthermore, at low concentrations, PABC is non-toxic and non-irritant.

Polymeric biguanides have found use as general disinfecting agents in the food industry and, very successfully, for the disinfection of swimming pools. PHMB is a membrane-active agent that also impairs the integrity of the outer membrane of gram-negative bacteria, although the membrane may also act as a permeability barrier. Activity of PHMB increases on a weight basis with increasing levels of polymerization, which has been linked to enhanced inner membrane perturbation. It has very low toxicity to higher organisms such as human cells, which have more complex and protective membranes. However, no activity against spores has been identified.

Biocidal formulations comprising polymeric biguanides are known and are used, for example, in contact lens solutions and in compositions applied to surface wipes and sprays.

Compositions comprising polymeric biguanides have also been associated with sporicidal activity against bacterial endospores, for example in US 2004/0204496.

However, polymeric biguanides when taken alone, in any concentration, or in any composition comprising no other active agents, have been shown not to be sporicidally active.

Accordingly, the previously disclosed compositions comprising polymeric biguanides as sporicides require the presence of further sporicidally active agents. For example, all of the compositions disclosed in US 2004/0204496 contain a bis-biguanide such as alexidine and/or a chlorhexidine compound. Bis-biguanides have previously been associated with spodicidal activity (e.g. Jones et al., International Journal of Pharmaceutics Volume 119(2), 1995, 247-250) and, as with other known sporicides, bis-biguanides are associated with higher toxicity and higher levels of irritation, than other biocides. Furthermore, bis-biguanides are biocidally active within a comparatively narrow pH range and are thus unsuitable for certain applications, for example for use in fungicidal compositions, which are typically alkaline solutions.

Thus, there remains a need for a low toxicity sporicidal composition, and a composition which provides a long lasting sporicidal effect when applied to a surface.

### Summary of the Invention

According to a first aspect of the present invention, there is provided the use of a composition comprising one or more biguanide polymers, and one or more further active agents, as a sporicide, characterised in that the or each further active agent is, when taken alone, sporicidally inactive. The composition is defined in the appended claims.

By the sporicidal or biocidal activity of an active agent, when taken alone, we mean the activity of the active agent in biocidal compositions lacking a biguanide polymer (which may be compositions having a single active agent or several active agents).

Preferably the one or more further active agents are sporicidally inactive at the concentration of the or each said active agent in non-toxic compositions. Preferably the one or more further active agents are sporicidally inactive at much greater concentrations (such as ten times, or greater than ten times the concentration of the active agent in biocidal and/or non-toxic compositions), or at any concentration. Preferably the one or more further active agents are sporicidally inactive in their pure form.

By sporicide and sporicidally active, and related terms, we mean active against spores, including spores of bacteria, fungi, molds, algae, plants or other organisms, including in particular bacterial endospores. Accordingly, a sporicidally active agent may active against spores including endospores. Additionally, an active agent which is, when taken alone, sporicidally inactive may be endosporicidally inactive (for example inactive against bacterial endospores) but may (or may not) be active against other types of spores.

The composition may be used to kill the spores of *C. difficile,* and the one or more further active agents may be inactive against the spores of *C. difficile,* except in the presence of the one or more biguanide polymers.

It has now been surprisingly found that compositions comprising polymeric biguanides and one or more further biocidal agents selected from quaternary monoammonium salts and with a polyorganosiloxane, are effective as a sporicidal agent and are particularly effective against the spores of C. *difficile.*

Thus there is provided a biocidal composition which can be used in hospital due to its low toxicity, in particular compositions comprising one or more further active agents which are not in themselves sporicidally active which are also known to produce less irritation and/or are of lower toxicity than active agents which are sporicidal, when taken alone, and which composition can effectively diminish the risks of infections resulting from exposure to bacterial or fungal spores.

Biguanide polymers are known to be sporicidally inactive, when taken alone, or in any concentration in a solution or composition comprising no other active agents. Furthermore, we have observed that there is substantially less, or no, sporicidal activity observed in relation to compositions lacking one or more of the further active agents and, in particular, lacking a further active agent or a polymeric biguanide. Accordingly, the sporicidal activity may be regarded as arising from a synergistic effect between polymeric biguanides and the one or more further active agents. Thus, although not wishing to be bound by theory, is it postulated that the polymeric biguanide interacts synergistically with the one or more further active agents to produce a composition having a surprisingly enhanced level of sporicidal activity, or, in compositions wherein the one or more further active agents are not, when taken alone, sporicidally active, to produce a composition having surprising sporicidal activity.

By synergistic effect, between a first and at least one second constituent, in relation to the present invention, we mean that the sporicidal (or biocidal) activity in relation to compositions lacking the first constituent, and in relation to compositions lacking the at least one second constituent, is greater (in terms of efficacy or durability, or the range of organisms against which activity is observed) than either of the compositions lacking the first or at least one second constituent, or which might be expected from a combination of the sporicidal or biocidal activities of the compositions lacking the first or at least one second constituent.

Preferably, the composition does not comprise bis-biguanides, and in particular chlorhexidine compounds (e.g. chlorhexidine or chlorhexidine glutonates) or alexidine compounds. Bis-biguanide compounds are known irritants and are known to produce irritation, for example eye irritation, even at very low concentrations (such as the concentrations required for biocidal compositions). For example, chlorhexidine is known to cause greater irritation, or to cause irritation at lower concentrations, than polymeric biguanides such as PHMB. Furthermore, bis-biguanides are biocidally active within a comparatively narrow pH range. For example, chlorhexidine compounds are known to hydrolyze at high pH and are thus unsuitable for use in compositions above approximately pH 7 or 8. Polymeric biguanides and various other active agents are more stable and, for example, may be less prone to hydrolysis at higher or lower pH.

Compositions comprising polyorganosiloxanes but lacking bis-biguanides are therefore sporicidally and/or biocidally active in a wider range of conditions than compositions comprising bis-biguanides. This is particularly advantageous for high pH compositions also having fungicidal further active agents. In addition, since pH can change when a composition is allowed to dry on a surface (for example when sprayed onto a surface and allowed to dry, or when fixed to a surface by drying or otherwise removing a solvent or carrier), compositions of the invention lacking bis-biguanides are particularly suitable for use in treating surfaces.

Preferably, the composition further comprises a suitable excipient, diluent or carrier.

According to a second aspect of the present invention, there is provided a method for killing spores (and typically in particular, the spores of C. *difficile*), from a surface or a material which comprises the step of providing or applying an effective amount of a biocidal composition which comprises one or more biguanide polymers, and one or more further active agents on said surface or material, characterised in that the or each further active agent is, when taken alone, sporicidally inactive. The composition is as defined in the appended claims.

The biguanide polymer is preferably a biguanide polymer hydrochloride. Preferably it comprises a mixture a PHMB molecules having a molecular weight ranging from 500 to 20,000 and having preferably an average molecular weight of about 3,000 such as the biguanide polymer marketed under the Trade Name Vantocil IB.

Herein, the unit of concentration % w/w means percentage by weight. For example, if a composition comprises a gram of a first compound and 99 g of a second compound, the first compound has a concentration of 1% w/w and the second compound has a concentration of 99% w/w.

Herein, the unit of concentration ppm means parts per million, by mass. For example, if 100 g of a composition comprises a gram of a first compound, the first compound is present in a concentration of 10,000 ppm, and therefore a concentration of 1% w/w corresponds to a concentration of 10,000 ppm.

The concentration of the biguanide polymer is advantageously lower than 10% w/w, preferably lower than 5% w/w and more preferably lower than 3%. The minimum concentration of the biguanide polymer is preferably at least 0.1% w/w (i.e. 1000 ppm) and preferably ranges between 2 to 5% w/w.

The composition may comprise a diluent, excipient or carrier, which, in some embodiments, is a non-volatile diluent, excipient or carrier. Such carrier is preferably water as a water-based composition is both safe and environmentally friendly. The carrier may be a glycol, an ester derivative of a glycol or an ether derivative of a glycol.

The one or more further active agents complement and preferably synergistically enhance the biocidal activity of the composition. The one or more further active agents selected may further depend on the intended use of the composition, in particular may be based on the ranges of micro organisms that are required to be killed by treatment of the surface or implement with the composition and method of the invention.

The one or more further active agents may be selected from the group consisting of a biocidal, anti-microbial, bactericidal, fungicidal, germicidal, yeasticidal, moldicidal, algicidal, virucidal agent, or a mixture thereof.

The one or more further active agents may be selected from cationic, amphoteric, amino, phenolic and halogen containing biocides.

The composition comprises one or more further active agents which are selected from quaternary monoammonium salts. Examples of which include cationic biocides such as:
- cocoalkylbenzyldimethylammonium, C12-C14 alkylbenzyldimethylammonium, cocoalkyldichlorobenzyldimethylammonium, tetradecylbenzyldimethylammonium, didecyldimethylammonium and dioctyldimethylammonium chlorides,
- Myristyltrimethylammonium and cetyltrimethylammonium bromides,
- Monoquaternary heterocyclic amine salts such as laurylpyridinium, cetylpyridinium and C12 - C14 alkylbenzyldimethylammonium chlorides.

Examples of other biocides which may be used include:
Cationic biocides such as:
   - Triphenylphosphonium fatty alkyl salts such as myristyltriphenylphosphonium bromide.

Polymeric biocides such as those derived from the reactions:
- Of epichlorohydrin and dimethylamine or diethylamine,
- Of epichlorohydrin and imidazole, Of 1, 3-dichloro-2-propanol and dimethylamine,
- Of 1, 3-dichloro-2-propanol and 1, 3-bis(dimethylamino)-2 propanol,
- Of ethylene dichloride and 1, 3-bis(dimethylamino)-2-propanol, and
- Of bis(2-chloroethyl) ether and of N, N'-bis (dimethylaminopropyl)urea or thiourea.

Amphoteric biocides such as derivatives of N-(N'- C8 - C18 alkyl-3-aminopropyl)glycine, of N-(N'-(N"-C8 - C18 alkyl-2-aminoethyl)-2-aminoethyl) glycine, of N,N-bis(N'-C8 - C18 alkyl-2-aminoethyl)glycine, such as (dodecyle) (aminopropyl) glycine and (dodecyl) (diethylenediamine) glycine;

Amines such as N-(3-aminopropyl)-N-dodecyl-1,3-propanediamine;

Phenolic biocides such as para-chloro-meta-xylenol, dichloro-metaxylenol, phenol, cresols, resorcinol, resorcinol monoacetate, and their derivatives or water-soluble salts;

Halogenated biocides such as iodophores and hypochiorite salts, for example sodium dichloroisocyanurate;

5-chloro-2-methyl-4-isothiazolin-3-one; 1,2 benzisothiazol-3(2H)-one; and 2-methyl-4-isothiazolin-3-one.

The one or more further active agents in the composition may be present in an amount of from 0.01% to 20% w/w. In some embodiments, each said further active agent is present in an amount of from 0.01% to 11% w/w, or from 0.02% to 11 % w/w.

The one or more further active agents may comprise one, or a combination of, didecyl-dimethyl ammonium chloride, alkylbenzyl-di-methyl ammonium chloride, 1,2 benzisothiazol-3(2H)-one, 2-methyl-4-isothiazolin-3-one, or other biocides, for example one or a combination of the cationic, polymeric, amphoteric, amine or phenolic biocides set out above.

In some embodiments, the composition comprises two further active agents. In some embodiments, the composition comprises three, or four further active agents.

The further active agent or agents is preferably one or more of;
- one or more isothiazolone compounds, such as benzisothiazolone or methylisothiazolone;
- one or more cationic biocides, for example C12-C14 alkylbenzyldimethylammonium chloride, didecyldimethylammonium chloride, or other quaternary monoammonium salts.

We have observed a particularly strong effect (which we postulate to be a synergistic effect) from the inclusion of one or more quaternary ammonium salts in compositions comprising one or more polymeric biguanides.

One or more of the one or more further active agents may be contained in a non volatile carrier. Accordingly, the composition may further comprise one or more non-volatile carriers. The or each non-volatile carrier may be water, a glycol, an ester derivative of a glycol or an ether derivative of a glycol. In particular, alkylene glycols and poly alkylene glycols such as diethylene glycol and polyethylene glycol may be used. Alternatively, the or each carrier may be an alcohol having from 3 to 30 carbon atoms, preferably at least 10 carbon atoms.

The composition may further comprise other ingredients, such as surfactants, chelating agents (such as aminocarboxylates, (ethylenediaminetetra-acetates, nitrilotriacetates, N,N-bis(carboxymethyl)-glutamates, citrates), alcohols (ethanol, isopropanol, glycols) detergency adjuvants (phosphates, silicates), dyes, and fragrances.

The surfactants which may be present in the composition of the invention may include: non-ionic surfactants such as ethylene oxide/propylene oxide block polymers, polyethoxylated sorbitan esters, fatty esters of sorbitan, ethoxylated fatty esters (containing from 1 to 25 units of ethylene oxide) polyethoxylated C8-C22 alcohols (containing from 1 to 25 units of ethylene oxide), polyethoxylated C8-C22 alkylphenols (containing from 5 to 25 units of ethylene oxide), alkylpolyglycosides, amine oxides (such as C10-C18) alkyldimethylamine oxides, C8-C22 alkoxyethyldihydroxyethylamine oxides) amphoteric or zwitterionic surfactants such as C6-C20 alkylamphoacetates or amphodiacetates (such as cocoamphoacetates), C10 - C18 alkyldimethylbetaines, C10 -C18 alkylamidopropyldimethylbetaines, C10-C18 alkyldimethylsulphobetaines, C10-C18 alkyl amidopropyldimethylsulphobetaines.

The composition further comprises a polyorganosiloxane or a mixture thereof. One or more, or all of the or each polyorganosiloxane may be a functionalised polyorganosiloxane, comprising polar functional groups or more preferably ionic, or cationic, functional groups. One or more, or all of the or each polyorganosiloxane may be a functionally terminated polyorganosiloxane (i.e. a polyorganosiloxane wherein polymer chains are terminated at one or both ends by a functional group, which may be a polar or, more preferably an ionic, or cationic, functional group).

Polyorganosiloxanes are known surface wetting agents.

Functionalised polyorganosiloxanes and in particular functionally terminated polyorganosiloxanes (such as cationic functionally terminated polyorganosiloxanes) interact strongly with surfaces (which are typically negatively charged) and compositions comprising such polyorganosiloxanes are particularly suitable for the treatment of materials and surfaces. Functionalised polyorganosiloxanes, and in particular functionally terminated polyorganosiloxanes (such as cationic functionally terminated polyorganosiloxanes) may similarly have strong interactions with other polar molecules in the composition, which may be polymeric biguanides and further active agents, and thereby retain such polar molecules to any material or surface to which the composition is applied.

Polyorganosiloxanes are also known as silicone polymers.

Polyorganosiloxanes which can be used in the invention are of the type having the formula A:

Formula A: T¹R¹R²SiO(R³R⁴SiO)ᵣ(R⁵T²SiO)ₛSiR⁶R⁷T³

wherein the symbols R¹, R², R³, R⁴, R⁵, R⁶ and R⁷, which are identical or different, represent a hydrogen, phenyl or a C₁ - C₆ alkyl radical, and the symbols T¹, T² and T³, which are identical or different, represent a hydrogen, phenyl, a C₁-C₆ alkyl radical, or an alkyl group of the form

-R⁸OR⁹X

wherein R⁸ and R⁹, which are identical or different, represent a C₁ to C₆ alkyl radical containing none, one or more secondary alcohol groups, and X represents a primary alcohol or a quaternary amine of the form

-(NR¹⁰R¹¹R¹²)⁺ Z⁻

wherein R¹⁰, R¹¹, and R¹², which are identical or different, represent C₁ -C₁₉ alkyl or alkene groups, either linear or branched chain, and Z represents an acetate anion.
r is an average value ranging from 1 to 500;
s is an average value ranging from 1 to 10;

It is preferred to use a composition, wherein the polyorganosiloxane is a polymer of formula B:

Formula B: T(Me)₂SiO(SiMe₂O)ᵣ(SiMeTO)ₛSiMe₂T

Wherein
r is an average value ranging from 1 to 100, preferably 80,
s is an average value ranging from 1 to 10, preferably 2, 15
T represents a group of the formula:

-(CH₂)₃OCH₂CHOHCH₂X

Wherein X represents a primary alcohol, or an amine of the form:

-NMe₂Y⁺ Acetate

wherein Y represents a C₁₁-C₁₃ alkyl.

Such a mixture is marketed under the reference BC2211 by the company Basildon Chemical Company Ltd (Kimber road, Abingdon, Oxon).

The composition comprises a polyorganosiloxane or a blend of polyorganosiloxanes. The polyorganosiloxane or the blend of polyorganosiloxanes may be present in the composition in an amount of 0% to 10% w/w. In some embodiments, the polyorganosiloxane or the blend of polyorganosiloxanes is present in an amount of from 10% to 50% w/w and may be present in the amount of from 30% to 40% w/w. For example, the polyorganosiloxane or the blend of polyorganosiloxanes may be present in an amount from 0% to 10% w/w in a composition comprising water as a diluent, the said composition being then applied to a surface (such as the surface of a fabric) and being fixed thereto by drying so as to remove all or a substantial part of the water, the resulting composition comprising an amount from 10% to 50% w/w of the polyorganosiloxane or the blend of polyorganosiloxanes.

Advantageously, the polyorganosiloxane or the blend of polyorganosiloxanes acts as a carrier to introduce the active agent to the surface, implement or the like to be treated by the composition of the invention. The amino and/or polyether (or other) functions of polyorganosiloxanes interact with the biguanide polymer (or polymers) and the further active agent (or agents) and also interact with the surface to which the composition is applied, thereby retaining the said biguanide polymer or polymers and the said further active agent or agents on the surface.

The composition of the invention provides disinfection of surfaces for a considerable time after application and will remain active after washing and/or abrading (polishing). This is advantageous over conventional biocides which quickly lose their efficacy after application particularly when the treated surface is washed or abraded.

We have observed that surfaces treated with compositions comprising polymeric biguanides and polyorganosiloxanes remain sporicidally and biocidally active for a longer period of time after application to a surface, and are particularly sporicidally and biocidally active, as compared to compositions lacking a polyorganosiloxane. We have further observed that the effect of the addition of polyorganosiloxanes to biocidal compositions comprising only monomeric, dimeric or other small molecule biocidal agents, is less pronounced.

The interaction between polyorganosiloxanes, and in particular functionally terminated polyorganosiloxanes such as those of formula A and formula B, and other active agents (including polymeric biguanides) is predominantly an electrostatic interaction between polar chemical functionalities. Although not wishing to be bound by theory, it is postulated that higher molecular weight polymeric units of polymeric biguanides comprise a large number of such functional units thereby providing an enhanced electrostatic interaction. It is also proposed that polymeric biguanide species are more strongly physically bound to other polymeric species, such as polyorganosiloxanes (which may be due, for example, to entanglement of polymer chains).

Accordingly, the polymeric biguanides and the one or more further active agents (which may also bind electrostatically and/or physically to the polymeric biguanide, some or all of which may be polymeric further active agents), and are thus more strongly physically bound to the polyoranosiloxane or blend thereof than the active agents of compositions comprising only small molecule active agents. Thus, polyoranosiloxanes have a more pronounced effect on the retention of polymeric biguanides and any further active agents interacting therewith, than compositions comprising only small molecule active agents (for example compositions comprising biguanides, bis-biguanides and/or additional small molecule active agents).

When the composition is applied to a surface, material or instrument, it may form a coating layer thereon which contains said polymeric biguanide or biguanides and the said one or more further active agents, so that any spores, endospores or other micro organisms present on or subsequently contacting the surface or instrument are killed.

If the composition further comprises a surfactant, this may enhance the spreading ability of the composition over substantially the entire surface whilst imparting cleaning and detergent properties to the composition.

The composition or the method according to the invention is effective at killing spores, endospores or other micro organisms under dry or wet conditions.

Advantageously, the composition or method may be used in different environments, e.g. in the medical or health care industry, for example in hospitals, in the food industry, for example in manufacturing plants and restaurants or in domestic environments.

The composition may be provided in concentrated form and may diluted before applying it to a surface or implement, such as by 1 to 100 fold or 1 to 1000 fold, for example by adding water. Alternatively the composition may be provided at a concentration ready-to-use.

In some embodiments, the composition may be provided in a first concentration in a diluent, excipient or carrier, for use in applying to a surface or impregnating a surface such as a fabric surface, and some or all of the diluent or excipient may subsequently be removed so as to increase the concentration of the composition. In some embodiments, the composition may be fixed to a surface by removing all or a substantial part of the composition, for example by applying heat or otherwise drying the surface so as to cause some or all of the diluent, excipient or carrier to evaporate. Thus, the method may comprise diluting the composition. Alternatively, or in addition, the method may comprise drying the composition, or otherwise removing (e.g. by evaporation) some or all of the diluent, excipient or carrier

The method may comprise fixing the composition to a surface, or to a material impregnated with the composition, by drying or otherwise removing some or all of the diluent, excipient or carrier, or by curing.

The composition may be effective at controlling not only spores and more particularly spores of Clostridia such as *Clostridium Difficile,* but is further effective in controlling the proliferation and/or elimination of many types of micro organisms, including gram-positive and gram- negative bacteria, such as at least one, and preferably several, of:
Bacillus cereus, Bacillus subtilis, Brevibacterium ammoniagenes, Brucella abortus, Klebsiella pneumonia, Lactobacillus casei, Proteus vulgaris, Listeria monocytogenes, Pseudomonas aeruginosa, Salmonella gallinarum, Salmonella typhosa, Staphylococcus aureus, Steptococcus faecalis, Flavobacterium species, Bacillus species, Escherichia species, Aeromonas species, Anchromobacter species and Alcaligenes species, fungi such as: Cephalosporium species, Cladosporium species, Fusarium species, Paecilomyces species, Penicillium species, Streptomyces species, Trichophyton interdigitale, Chaetorarium globesom, Aspergillus niger, and Ceniphora puteana, Cornyebacterium species, Proteus penneri, Enterobacter aerogenes, Salmonella enteritidis; yeasts such as Monilia albicans and Saccharomyces cerevisiae, Candida albicans; algae such as Chlorella pyrenoidosa Chlorella vulgaris, Nostoc commune, Scenedesmus vacuolates /and Anabaena cylindrical; and moulds such as Epidermophyton floccosum, Microsporum canis, Tricophyton mentagrophytes and Candida albicans.

Also disclosed is a composition for use in providing a material (such a textile or a plastics material) with a sporicidal property, the composition comprising one or more biguanide polymers, one or more further active agents selected from quaternary monoammonium salts, and a polyorganosiloxane or a blend of polyorganosiloxanes, characterised in that the or each further active agent is, when taken alone, sporicidally inactive.

We have observed that surfaces treated with compositions comprising polymeric biguanides and polyorganosiloxanes remain sporicidally and/or biocidally active for a longer period of time after application to a surface, and are particularly sporicidally and/or biocidally active, as compared to compositions compring a small molecule active agent and one or more polyorganosiloxanes. Although not wishing to be bound by theory, it is proposed that the persistence and efficacy of the compositions of the present invention derive from unexpectedly strong interaction (including electrostatic interactions) between the polymeric species.

Accordingly, also disclosed is a composition for use in providing a textile with a biocidal property, the composition comprising a biguanide polymer or a mixture of biguanide polymers, or a polymeric biocide or mixture thereof, and a polyorganosiloxane or a mixture of polyorganosiloxanes. The invention also extends to a textile impregnated or treated with a composition comprising a biguanide polymer or a mixture of biguanide polymers, one or more active agents selected from quaternary monoammonium salts, and a polyorganosiloxane or a mixture of polyorganosiloxanes.

The composition disclosed herein may be incorporated into a material such as a textile material (which may be a woven or a non-woven textile material and which is preferably a non-woven fabric material) or a plastics material.

Preferably the composition is for use in providing a material such as a textile with a sporicidal activity. Advantageously, the material is provided with a sporicidal activity when the composition thereon is wet (such that the material is wet), or dry, such that the material is dry (for example the material may be sporicidal after the composition has been fixed to the material, for example following a drying step).

We have observed that the textiles of the invention are sporicidally active when dry, i.e. during normal use, and that the active agents of the composition thereon need not be mobile in solution in order to convey a sporicidal effect. Therefore, sporicidal contamination of the textiles of the invention is prevented.

The composition preferably comprises at least two different polyorganosiloxanes,

Further preferred and optional features of the composition disclosed herein correspond to preferred and optional features of the first and second aspects.

According to a third aspect of the invention, there is provided a textile treated with a composition according to the invention for killing spores and/or the prevention of sporicidal contamination, in particular *C*. *Difficile* spores.

Advantageously the treated textile requires biocidal activity, which is a sporicidal activity, which is durable to repeated laundering.

Preferred and optional features of the composition of the material of the third aspect correspond to preferred and optional features of the first and second aspects and the composition as described above.

According to a fourth aspect of the present invention there is provided a method of providing a textile with a sporicidal activity comprising the steps of impregnating the textile with a biocidal composition; and fixing the impregnated composition to the material.

The step of fixing the impregnated composition may comprise drying, or heating (so as to remove some or substantially all of a diluent or excipient), or curing the composition and/or the material.

The textile may be woven or non-woven and may, in some embodiments be a non-woven fabric.

The method may comprise the step of drying the textile to remove excess composition following the impregnation step. The drying step may comprise a heating step.

The impregnation step may comprise applying composition to the textile and passing it through a mangle. The mangle may be a pad mangle.

The textile may be soaked with composition as part of the impregnation process.

The fixing step may comprise a baking step and may comprise causing cross-linking between chemical species (and in particular between polymeric chemical species) of the composition to the textile (or the material, as the case may be), or may comprise causing cross-linking between chemical species (and in particular between polymeric chemical species) of the composition.

The properties of durable biocidal or sporicidal activity regardless of repeated laundering, or durable biocidal or sporicidal activity regardless of prolonged exposure of a material to the environment (for example a hospital environment) are particularly advantageous.

The method of the present invention may therefore render the composition resistant to being washed out of the textile, or leached out of the impregnated material, as the case may be.

The composition is preferably non-flammable and/or a non-irritant.

A textile formed in accordance with the present invention may be used to make articles such as bed sheets, mattress covers, pillowcases, clothing and domestic furnishings like curtains and tablecloths.

According to a further aspect of the invention there is provided a textile having a sporicidal activity made according to the method herein described.

The textile may be woven or non-woven but is preferably non-woven, and can be made of synthetic fibers such as polyester, vegetal fibers, such as cotton, or animal fibres such as wool, or be a mixtures of these fibres. In some embodiments, the textile is non-woven polypropylene.

Advantageously the concentration of biguanide polymers contains in said textile may range from 100 ppm to up to 10,000 ppm, and more preferably from 3,000 ppm to 6,000 ppm.

### Detailed Description of an Example Embodiment

Embodiments of the present invention will now be described by way of non- limiting example only:
Formulations 1-4 were prepared having the following compositions:

### Formulation 1 - "Endurocide CD": composition with polyorganosiloxanes

A biocidal composition was made by mixing 8% Endurocide Plus B/N E-154 plus 3% Vantocil IB in water. Source raw materials were Acticide MBS (comprising 2.5% w/w benzisothiazolone and 2.5% w/w methylisothiazolone), Acticide BAC 50M (comprising a 70:30 ratio of, respectively, C12 and C14 alkyldimethylbenzylammonium chloride at a total concentration of 50% w/w, in water), Acticide DDQ 50 (comprising 50% w/w di-n-decyldimethylammonium chloride and 20% w/w propan-2-ol co-solvent, in water), BC2211 (comprising 20% w/w cationic silicone polymer according to formula B, above and <15% w/w alcohol ethoxylates, in water) and Vantocil IB (comprising 20% w/w PHMB, in water). The chemical formulation was as follows in ppm by mass:

| **Chemical** | **Concentration** | **Source Raw Material** |
|---|---|---|
| Benzisothiazolone | 160ppm | Acticide MBS |
| Methylisothiazolone | 160ppm | Acticide MBS |
| Alkyldimethylbenzylammonium chloride 70% C12 and 30% C14 | 2000ppm | Acticide BAC 50M |
| Di-n-decyldimethylammonium chloride | 4400ppm | Acticide DDQ 50 |
| Propan-2-ol | 1760ppm | Acticide DDQ 50 |
| Cationic silicone polymer (as per Formula B) | 4800ppm | BC2211 |
| Alcohol ethoxylates C11-C15 polymers, 5 and 9 units | <3600ppm | BC2211 |
| Polyhexamethylene biguanide | 6000ppm | Vantocil IB |
| Water | Balance | |

### Formulation 2 - "Endurocide SW1" : composition without cationic silicone polymers

A biocidal composition was prepared having a similar composition to Formulation 1, but without BC2211 (i.e. cationic silicone polymer or alcohol ethoxylates), the balance of the composition being made up by water such that the concentrations of remaining compounds were the same as Formulation 1.

The chemical formulation was as follows in ppm by mass:

| **Chemical** | **Concentration** | **Source Raw Material** |
|---|---|---|
| Benzisothiazolone | 160ppm | Acticide MBS |
| Methylisothiazolone | 160ppm | Acticide MBS |
| Alkyldimethylbenzylammonium chloride 70% C12 and 30% C14 | 2000ppm | Acticide BAC 50M |
| Di-n-decyldimethylammonium chloride | 4400ppm | Acticide DDQ 50 |
| Propan-2-ol | 1760ppm | Acticide DDQ 50 |
| Polyhexamethylene biguanide | 6000ppm | Vantocil IB |
| Water | Balance | |

### Formulation 3 - "Endurocide SW2": concentrated composition without cationic silicone polymers

A biocidal composition was made by mixing 10 % of an Endurocide Plus (the Endurocide Plus formulation lacking BC2211) with 5% Vantocil IB in water.

This sample is a hazardous material, Xi irritant and may cause sensitisation by skin contact.

The chemical formulation is as follows in ppm by mass:

| **Chemical** | **Concentration** | **Source Raw Material** |
|---|---|---|
| Benzisothiazolone | 200ppm | Acticide MBS |
| Methylisothiazolone | 200ppm | Acticide MBS |
| Alkyldimethylbenzylammonium chloride 70% C12 and 30% C14 | 2500ppm | Acticide BAC 50M |
| Di-n-decyldimethylammonium chloride | 5500ppm | Acticide DDQ 50 |
| Propan-2-ol | 2200ppm | Acticide DDQ 50 |
| Polyhexamethylene biguanide | 10,000ppm | Vantocil IB |
| Water | Balance | |

### Formulation 4: "Endurocide SDL"

A composition according to the invention has been made by mixing 8% Endurocide Plus and 2% Vantocil IB

The chemical formulation is as follows in ppm by mass:

| **Chemical** | **Concentration** | **Source Raw Material** |
|---|---|---|
| Benzisothiazolone | 160ppm | Acticide MBS (0.64%) |
| Methylisothiazolone | 160ppm | |
| Alkyldimethylbenzylammonium chloride 70% C12 and 30% C14 | 2000ppm | Acticide BAC 50M (0.88%) |
| Di-n-decyldimethylammonium chloride | 4400ppm | Acticide DDQ 50 (2%) |
| Propan-2-ol | 1760ppm | Acticide DDQ 50 |
| Cationic silicone polymer (as per Formula B) | 4800ppm | BC2211 (2.4%) |
| Alcohol ethoxylates C11-C15 polymers, 5 and 9 units | <3600ppm | |
| Polyhexamethylene biguanide | 4000ppm | Vantocil IB (2%) |
| Water | Balance | |

### Example 1: Biocidal Activity

Biocidal activity of Formulations 1-3 were tested according to the standard suspension test EN 13704 for bacterial *C. difficile* and were found effective at 30 minutes.

### Example 2: Sporicidal activity

Sporicidal activity is shown by testing Formulation 4 according to the EN 13704 standard at 20°C shows an in vitro Log 2.4 reduction in C. difficile spores.

| Organism | Method | Concentration | Contact Time | Test Results (log reduction) |
|---|---|---|---|---|
| Clostridium difficile ATCC 9689 | M | Ready to Use | 30 mins | 2.4 |

| | | | | |
|---|---|---|---|---|
| N = Neutralisation M = Membrane filtration | | | | |

### Example 3: Manufacture of a textile according to the invention and testing of sporicidal activity.

A biocidal textile according to the invention was manufactured according to the following method:
A piece of textile was dipped into a volume of Formulation 4 and mixed with the solution so as to saturate the textile with said composition.

The textile was then passed through a pad mangle to impregnate the composition into the fibres of the textile and remove excess composition.

The impregnated textile was dried in a Stentor heating machine. The drying step may be carried out, for example, by a temperature of between 50°C and 200°C. A temperature of 200°C is preferred in some cases. However the fabric in this example was dried at a temperature of 70°C.

It should be noted that the composition can advantageously be fixed within the textile, if required, for example by baking in a baker. The baking temperature may be in the range of 100° to 300°C.

The fabric sample, once dried as described above, was independently analyzed using the standard AATCC147-1998 following the following process:

### Method of Analysis Used - AATCC 147-1998 - Clostridium difficile spores

1. Two CBA plates were streaked with five parallel lines of Clostridium difficile spores ATCC 9689 and allowed to dry.
2. A 20 x 50 mm rectangle of each fabric was placed on each of the two plates from the previous step.
3. The plates were incubated for 72 hours and examined for bacterial growth on the surface of the fabric and for bacterial growth on the agar under the fabric.

**Results**

| MGS No. | Fabric ID | Zone of Inhibition | Growth under fabric* |
|---|---|---|---|
| 16517 | Fabric treated with Formulation 4 | 3mm | -ve |

| | | | |
|---|---|---|---|
| *-ve denotes inhibition under fabric, +ve denotes growth under fabric | | | |

Thus, the fabric impregnated with a composition of the present invention was found to be effective at killing spores.

### Formulations A-G

Formulation A was prepared, having the following composition in ppm by mass:

| **Chemical Number** | **Chemical** | **Concentration** | **Source Raw Material** |
|---|---|---|---|
| 1 | Benzisothiazolone | 160ppm | Acticide MBS (0.64%) |
| 2 | Methylisothiazolone | 160ppm | |
| 3 | Alkyldimethylbenzylammonium chloride 70% C12 and 30% C14 | 2000ppm | Acticide BAC 50M (0.4%) |
| 4 | Di-n-decyldimethylammonium chloride | 4400ppm | Acticide DDQ 50 (0.88%) |
| 5 | Propan-2-ol | 1760ppm | Acticide DDQ 50 |
| 6 | Cationic silicone polymer (as per Formula B) | 4800ppm | BC2211 (2.4%) |
| 7 | Alcohol ethoxylates C11-C15 polymers, 5 and 9 units | <3600ppm | |
| 8 | Polyhexamethylene biguanide | 4000ppm | Vantocil IB (2%) |
| 9 | Brominated fire retardant | | PD6267 (20%) |
| | Water | Balance | |

Formulations B-F were also prepared, each lacking one of the chemicals 1-9, with the balance of the missing component made up by water, as set out in the table below (where X denotes that a chemical is present, in the concentration of Formulation A, and O denotes that a chemical is not present):

| | **Formulation** | | | | | | |
|---|---|---|---|---|---|---|---|
| **Chemical Number** | A | B | C | D | E | F | G |
| 1 | X | X | O | X | X | X | X |
| 2 | X | X | O | X | X | X | X |
| 3 | X | X | X | O | X | X | X |
| 4 | X | X | X | X | O | X | X |
| 5 | X | X | X | X | O | X | X |
| 6 | X | X | X | X | X | O | X |
| 7 | X | X | X | X | X | O | X |
| 8 | X | X | X | X | X | X | O |
| 9 | X | O | X | X | X | X | X |

Each of the formulations was impregnated into a fabric, according to the method described above in Example 3, to produce corresponding Test Fabrics A-G.

### Example 4 - Testing of Sporicidal Activity of Test Fabrics A-G using "Halo Test": Agar Diffusion Test Method ISO 20645, CG147

Liquid agar was inoculated with C. *difficile* spores (NCTC 11209) and overlaid onto a pre-prepared (and not inoculated) thinly poured agar plate. The resulting plates were then allowed to solidify.

A 1 cm x 1 cm square of fabric was then placed at the centre of each plate and the plate incubated for 24 hours.

### Results

Results of the tests are set out in the table below:

| Fabric ID | Halo (mm) | Growth under fabric* |
|---|---|---|
| A | 6.0 | -ve |
| B | 6.5 | -ve |
| C | 5.5 | -ve |
| D | 0.5 | -ve |
| E | 1.5 | -ve |
| F | 0.0 | +/- |
| G | 4.0 | -ve |

| | | |
|---|---|---|
| * -ve = no growth +/- = moderate growth | | |

The fire retardant is not an active agent and, accordingly, halo test results of test fabrics A and B were similar.

Sample C, lacking Acticide MBS, which is present in the undried composition A at only 0.64%, never the less shows a small reduction in the halo diameter (compared to test fabric A), indicating that the isothiazolone active agents present in Acticide MBS contribute to the observed sporicidal effect of the impregnated fabrics.

Sample D, lacking Acticide BAC 50, which is present in the undried composition A at 0.4% shows very little halo, indicating that the active ingredient benzalkonium chloride (which, when taken alone is sporicidally inactive) makes a significant contribution to the observed sporicidal activity of test fabric A.

Sample E, lacking Acticide DDQ 50, present in the undried composition A at 0.88% also shows very little halo, indicating that the active ingredient dimethylammonoim chloride chloride (which, when taken alone is sporicidally inactive) makes a significant contribution to the observed sporicidal activity of test fabric A.

Sample F, lacking BC2211, present in the undried composition A at 2.4% shows a slight reduction in halo diameter very little halo, indicating that the cationic silicone polymer (which, when taken alone is not known to be biocidally active) makes a contribution to the observed sporicidal activity of test fabric A.

Sample G, lacking Vantocil IB, present in the undried composition A at 2% also shows no halo and moderate grown is observed under the fabric sample, indicating that the active ingredient PAMB (which, when taken alone is sporicidally inactive) makes a significant contribution to the observed sporicidal activity of test fabric A.

Thus, the combination of polymeric biguanide and any or all of the remaining active agents in Formulation A results in an unexpected sporicidal activity, which may be regarded as a synergistic effect between the polymeric biguanide and the further active agents. Furthermore, the further active agents each result in an unexpected enhancement of the sporicidal activity of a composition comprising a polymeric biguanide, which may also be regarded as a synergistic effect between each further active agent and the polymeric biguanide and/or each other further active agent, in the presence of the polymeric biguanide.

Additionally, an effect of polyorganosolixanes on the sporicidal activity of impregnated fabric materials has been observed, indicating that the polyorganosiloxanes advantageously enhance the interaction of the active agents, and in particular the polymeric biguanide active agents, with the surface.

## Claims

1. A method for killing spores from a surface or a material which comprises applying an effective amount of a biocidal composition on said surface or material, wherein said composition comprises: one or more biguanide polymers; one or more further active agents selected from quaternary monoammonium salts; a polyorganosiloxane or a blend of polyorganosiloxanes, and wherein the or each further active agent is, when taken alone, sporicidally inactive.

2. The method of claim 1, wherein one or more or all of the or each polyorganosiloxane is a functionally terminated polyorganosiloxane.

3. The method of claim 1 or claim 2, wherein the or each said polyorganosiloxane is a polymer of formula A or formula B, wherein Formula A is
T¹R¹R²SiO(R³R⁴SiO)ᵣ(R⁵T²SiO)ₛSiR⁶R⁷T³
wherein the symbols R¹, R², R³, R⁴, R⁵, R⁶ and R⁷, which are identical or different, represent a hydrogen, phenyl or a C₁ - C₆ alkyl radical, and the symbols T¹, T² and T³, which are identical or different, represent a hydrogen, phenyl, a C₁-C₆ alkyl radical, or an alkyl group of the form
-R⁸OR⁹X
wherein R⁸ and R⁹, which are identical or different, represent a C₁ to C₆ alkyl radical containing none, one or more secondary alcohol groups, and X represents a primary alcohol or a quaternary amine of the form
-(NR¹⁰R¹¹R¹²)⁺ Z⁻
wherein R¹⁰, R¹¹, and R¹², which are identical or different, represent C₁ -C₁₉ alkyl or alkene groups, either linear or branched chain, and Z represents an acetate anion, r is an average value ranging from 1 to 500, s is an average value ranging from 1 to 10; and Formula B is wherein
r is an average value ranging from 1 to 100, preferably 80,
s is an average value ranging from 1 to 10, preferably 2,
T represents a group of the formula:
-(CH₂)₃OCH₂CHOHCH₂X
wherein X represents a primary alcohol, or an amine of the form:
-NMe₂Y⁺ Acetate⁻
wherein Y represents a C₁₁ - C₁₃ alkyl.

4. The method of any one of claims 1 to 3 wherein quaternary monoammonium salts is the group consisting of cocoalkylbenzyldimethylammonium, C12-C14 alkylbenzyldimethylammonium, cocoalkyldichlorobenzyldimethylammonium, tetradecylbenzyldimethylammonium, didecyldimethylammonium and dioctyldimethylammonium chlorides, myristyltrimethylammonium and cetyltrimethylammonium bromides, and monoquaternary heterocyclic amine salts.

5. The method of claim 4 wherein said composition comprises C12-C14 alkylbenzyldimethylammonium chloride and didecyldimethylammonium chloride.

6. The method of any one of the preceding claims wherein said composition comprises as additional further active agents one or more isothiazolone compounds, such as benzisothiazolone or methylisothiazolone.

7. The method of claim 6 wherein said composition comprises di-decyl-di-methyl ammonium chloride, alkylbenzyl-di-methyl ammonium chloride, 1,2 benzisothiazol-3(2H)-one, 2-methyl-4-isothiazolin-3-one.

8. The method of any one of the preceding claims, wherein the or each said further active agent is present in an amount of from 0.01% to 20% by weight based on the weight of the composition.

9. The method of any one of the preceding claims, wherein the or each said polyorganosiloxane is present in an amount of from 10 to 50% by weight based on the total weight of the composition.

10. The method according to any one of the preceding claims, wherein the concentration of the or each said biguanide polymer in the composition is lower than 10% w/w.

11. The method according to any one of the preceding claims, wherein said surface is a textile and wherein the method comprises the step of impregnating the textile with the composition.

12. A method of providing a textile with a sporicidal activity according to claim 11, wherein said method comprises the step of fixing the impregnated composition to said textile.

13. A textile for killing spores and/or the prevention of sporicidal contamination, treated with a composition as defined any one of claims 1 to 10.

14. A textile according to claim 13, wherein said textile is dry.

15. A textile according to claim 13 or claim 14, wherein said textile is impregnated with said composition.

16. Use of a composition as a sporicide, wherein said composition is as defined in any one of claims 1 to 10.

## Patentansprüche

1. Verfahren zum Abtöten von Sporen auf einer Oberfläche oder einem Material, umfassend Aufbringen einer wirksamen Menge einer bioziden Zusammensetzung auf die Oberfläche oder das Material, wobei die Zusammensetzung umfasst: ein oder mehrere Biguanid-Polymere; einen oder mehrere weitere Wirkstoffe ausgewählt aus quaternären Monoammoniumsalzen; ein Polyorganosiloxan oder ein Gemisch von Polyorganosiloxanen, und wobei der oder jeder weitere Wirkstoff, wenn allein genommen, sporizid inaktiv ist.

2. Verfahren gemäß Anspruch 1, wobei eines oder mehrere oder alle von dem oder den Polyorganosiloxanen ein funktionell terminiertes Polyorganosiloxan ist/sind.

3. Verfahren gemäß Anspruch 1 oder Anspruch 2, wobei das oder jedes der Polyorganosiloxane ein Polymer der Formel A oder der Formel B ist, wobei Formel A
T¹R¹R²SiO(R³R⁴SiO)ᵣ(R⁵T²SiO)ₛSiR⁶R⁷T³
ist, wobei die Symbole R¹, R², R³, R⁴, R⁵, R⁶ und R⁷, die gleich oder verschieden sind, Wasserstoff, Phenyl oder einen C₁-C₆Alkylrest darstellen und die Symbole T¹, T² und T³, die gleich oder verschieden sind, Wasserstoff, Phenyl- oder einen C₁-C₆Alkylrest oder eine Alkylgruppe der Form
-R⁸OR⁹X
darstellen, wobei R⁸ und R⁹, die gleich oder verschieden sind, einen C₁- bis C₆Alkylrest darstellen, der keine, eine oder mehrere sekundäre Alkoholgruppen enthält, und X einen primären Alkohol oder ein quaternäres Amin der Form
-(NR¹⁰R¹1R¹²)⁺ Z⁻
darstellt, wobei R¹⁰, R¹¹ und R¹², die gleich oder verschieden sind, C₁-C₁₉Alkyl- oder Alkylengruppen darstellen, die linear oder verzweigtkettig sind, und Z ein Acetat-Anion darstellt, r ein Mittelwert in dem Bereich von 1 bis 500 ist, s ein Mittelwert in dem Bereich von 1 bis 10 ist; und Formel B
T(Me)₂SiO(SiMe₂O)ᵣ(SiMeTO)ₛSiMe₂T
ist, wobei
r ein Mittelwert in dem Bereich von 1 bis 100 ist, vorzugsweise 80,
s ein Mittelwert in dem Bereich von 1 bis 10 ist, vorzugsweise 2,
T eine Gruppe der Formel:
-(CH₂)₃OCH₂CHOHCH₂X
darstellt, wobei X einen primären Alkohol oder ein Amin der Form:
-NMe₂Y⁺ Acetat⁻
darstellt, wobei Y ein C₁₁-C₁₃Alkyl darstellt.

4. Verfahren gemäß einem der Ansprüche 1 bis 3, wobei es sich bei den quaternären Monoammoniumsalzen um die Gruppe bestehend aus Cocoalkylbenzyldimethylammonium-, C12-C14-Alkylbenzyldimethylammonium-, Cocoalkyldichlorbenzyldimethylammonium-, Tetradecylbenzyldimethylammonium-, Didecyldimethylammonium- und Dioctyldimethylammoniumchloriden, Myristyltrimethylammonium- und Cetyltrimethylammoniumbromiden und monoquaternären heterocyclischen Aminsalzen handelt.

5. Verfahren gemäß Anspruch 4, wobei die Zusammensetzung C12-C14-Alkylbenzyldimethylammoniumchlorid und Didecyldimethylammoniumchlorid umfasst.

6. Verfahren gemäß einem der vorstehenden Ansprüche, wobei die Zusammensetzung als zusätzliche weitere Wirkstoffe eine oder mehrere Isothiazolonverbindungen, wie z. B. Benzisothiazolon oder Methylisothiazolon, umfasst.

7. Verfahren gemäß Anspruch 6, wobei die Zusammensetzung Didecyldimethylammoniumchlorid, Alkylbenzyldimethylammoniumchlorid, 1,2-Benzisothiazol-3(2H)-on, 2-Methyl-4-isothiazolin-3-on umfasst.

8. Verfahren gemäß einem der vorstehenden Ansprüche, wobei der oder jeder der weiteren Wirkstoffe in einer Menge von 0,01 Gew.-% bis 20 Gew.-% bezogen auf das Gewicht der Zusammensetzung vorhanden ist.

9. Verfahren gemäß einem der vorstehenden Ansprüche, wobei das oder jedes der Polyorganosiloxane in einer Menge von 10 bis 50 Gew.-% bezogen auf das Gesamtgewicht der Zusammensetzung vorhanden ist.

10. Verfahren gemäß einem der vorstehenden Ansprüche, wobei die Konzentration des oder jedes der Biguanidpolymere in der Zusammensetzung kleiner als 10 % w/w ist.

11. Verfahren gemäß einem der vorstehenden Ansprüche, wobei die Oberfläche ein Textil ist und wobei das Verfahren den Schritt des Imprägnierens des Textils mit der Zusammensetzung umfasst.

12. Verfahren zum Bereitstellen eines Textils mit einer sporiziden Aktivität gemäß Anspruch 11, wobei das Verfahren den Schritt des Fixierens der imprägnierten Zusammensetzung an dem Textil umfasst.

13. Textil zum Abtöten von Sporen und/oder Verhindern von sporizider Kontamination, behandelt mit einer Zusammensetzung gemäß einem der Ansprüche 1 bis 10.

14. Textil gemäß Anspruch 13, wobei das Textil trocken ist.

15. Textil gemäß Anspruch 13 oder Anspruch 14, wobei das Textil mit der Zusammensetzung imprägniert ist.

16. Verwendung einer Zusammensetzung als Sporizid, wobei die Zusammensetzung gemäß einem der Ansprüche 1 bis 10 ist.

## Revendications

1. Méthode destinée à tuer des spores à partir d'une surface ou d'un matériau, comprenant l'application d'une quantité efficace d'une composition biocide sur ladite surface ou ledit matériau, dans laquelle ladite composition comprend : un ou plusieurs polymères de biguanide ; un ou plusieurs agents actifs supplémentaires choisis parmi les sels de monoammonium quaternaire ; un polyorganosiloxane ou un mélange de polyorganosiloxanes ; et où le ou chaque agent actif supplémentaire est, lorsqu'il est pris seul, inactif sur le plan sporicide.

2. Méthode selon la revendication 1, dans laquelle un ou plusieurs, ou l'ensemble, ou chacun des polyorganosiloxanes est un polyorganosiloxane à terminaison fonctionnelle.

3. Méthode selon la revendication 1 ou la revendication 2, dans laquelle le ou chacun desdits polyorganosiloxanes est un polymère de formule A ou de formule B, où la Formule A est
T¹R¹R²SiO(R³R⁴SiO)ᵣ(R⁵T²SiO)ₛSiR⁶R⁷T³
où les symboles R¹, R², R³, R⁴, R⁵, R⁶ et R⁷, qui sont identiques ou différents, représentent hydrogène, phényle ou un radical C₁-C₆alkyle, et les symboles T¹, T² et T³, qui sont identiques ou différents, représentent hydrogène, phényle, un radical C₁-C₆alkyle, ou un groupement alkyle de forme
-R⁸OR⁹X
où R⁸ et R⁹, qui sont identiques ou différents, représentent un radical C₁-C₆alkyle contenant un ou plusieurs groupements alcools secondaires, ou aucun, et X représente un alcool primaire ou une amine quaternaire de forme
-(NR¹⁰R¹¹R¹²)⁺Z⁻
où R¹⁰, R¹¹ et R¹², qui sont identiques ou différents, représentent des groupements alkyle ou alcène en C₁-C₁₉, à chaîne linéaire ou bien ramifiée, et Z représente un anion acétate, r est une valeur moyenne allant de 1 à 500, s est une valeur moyenne allant de 1 à 10 ; et la Formule B est
T(Me)₂SiO(SiMe₂O)ᵣ(SiMeTO)ₛSiMe₂T
où
r est une valeur moyenne allant de 1 à 100, préférablement 80,
s est une valeur moyenne allant de 1 à 10, préférablement 2,
T représente un groupement de formule :
-(CH₂)₃OCH₂CHOHCH₂X
où X représente un alcool primaire, ou une amine de forme :
-NMe₂Y⁺ Acétate⁻
où Y représente C₁₁-C₁₃alkyle.

4. Méthode selon l'une quelconque des revendications 1 à 3, dans laquelle les sels de monoammonium quaternaire appartiennent au groupe constitué par les chlorures de cocoalkylbenzyldiméthylammonium, C₁₂-C₁₄alkylbenzyldiméthylammonium, cocoalkyldichlorobenzyldiméthylammonium, tétradécylbenzyldiméthylammonium, didécyldiméthylammonium et dioctyldiméthylammonium, les bromures de myristyltriméthylammonium et cétyltriméthylammonium, et les sels d'amines hétérocycliques mono-quaternaires.

5. Méthode selon la revendication 4, dans laquelle ladite composition comprend du chlorure de C₁₂-C₁₄alkylbenzyldiméthylammonium et du chlorure de didécyldiméthylammonium.

6. Méthode selon l'une quelconque des revendications précédentes, dans laquelle ladite composition comprend, comme autres agents actifs supplémentaires, un ou plusieurs composés d'isothiazolone, tels que la benzisothiazolone ou la méthylisothiazolone.

7. Méthode selon la revendication 6, dans laquelle ladite composition comprend du chlorure de didécyldiméthylammonium, du chlorure d'alkylbenzyldiméthylammonium, de la 1,2-benzisothiazol-3(2H)-one, de la 2-méthyl-4-isothiazolin-3-one.

8. Méthode selon l'une quelconque des revendications précédentes, dans laquelle le ou chacun parmi lesdits agents actifs supplémentaires est présent selon une quantité allant de 0,01% à 20% en poids sur la base du poids de la composition.

9. Méthode selon l'une quelconque des revendications précédentes, dans laquelle le ou chacun parmi lesdits polyorganosiloxanes est présent selon une quantité allant de 10 à 50% en poids sur la base du poids de la composition.

10. Méthode selon l'une quelconque des revendications précédentes, dans laquelle la concentration en le ou chacun parmi lesdits polymères de biguanide dans la composition est inférieure à 10% p/p.

11. Méthode selon l'une quelconque des revendications précédentes, dans laquelle ladite surface est un textile et où la méthode comprend l'étape consistant à imprégner le textile avec la composition.

12. Méthode destinée à fournir une activité sporicide à un textile selon la revendication 11, où ladite méthode comprend l'étape consistant à fixer la composition imprégnée audit textile.

13. Textile destiné à tuer des spores et/ou à la prévention d'une contamination sporicide, traité par une composition telle que définie selon l'une quelconque des revendications 1 à 10.

14. Textile selon la revendication 13, où ledit textile est sec.

15. Textile selon la revendication 13 ou la revendication 14, où ledit textile est imprégné par ladite composition.

16. Utilisation d'une composition comme sporicide, dans laquelle ladite composition est telle que définie selon l'une quelconque des revendications 1 à 10.
